# EUROPEAN PATENT APPLICATION

(11) **EP 4 534 895 A1**
(43) Date of publication of application: **09.04.2025**
(21) Application number: 24204414.7
(22) Date of filing: 03.10.2024
(51) Int. Cl.: F21V 8/00, F21K 9/61, F21S 8/04, F21V 7/00

(54) **LOW PROFILE LUMINAIRES AND ASYMMETRIC LIGHT GUIDES THEREFOR**

(30) Priority: 06.10.2023 US 202363542989 P
(71) Applicant: LMPG Inc., Longueuil QC J4G 2H9 (CA)
(72) Inventor: WONG, Kenton Keng Ting, Burnaby, British Columbia, V3J 1C2 (CA)
(74) Representative: Riccardi, Elisa

(57) **Abstract**

A light guide is provided. The light guide includes: a light receiving face; a distal face opposite to the light receiving face; a first major face extending between, and perpendicular to, the light receiving face and the distal face; a second major face generally opposite to the first major face and including an angled portion tapering toward the first major face in a downstream direction; wherein the light guide includes a cross-sectional aspect ratio, defined by a width of the first major face divided by a height of the light receiving face, between 2.5:1 and 4:1, or between 2.75:1 and 3.75:1, or about 3.25:1. Luminaires incorporating the light guide, and related methods are also provided.

## Description

### Technical Field

This invention relates to low profile luminaires, and asymmetric light guides for such luminaires.

### Background

Point sources of light such as light emitting diodes (LEDs) introduce flexibility but also challenges in the design of architectural luminaires. In some design contexts it is desirable to have luminaires with low profiles, such as when installing against or within walls. A challenge in designing such low profile luminaires is maintaining a minimal form factor while simultaneously outputting sufficient and homogenous light. Low profile luminaires that provide homogenous light are desirable.

### Summary

The present invention comprises several aspects.

According to one aspect a light guide is provided. The light guide includes: a light receiving face; a distal face opposite to the light receiving face; a first major face extending between, and perpendicular to, the light receiving face and the distal face; a second major face generally opposite to the first major face and comprises an angled portion tapering toward the first major face in a downstream direction; wherein the light guide comprises a cross-sectional aspect ratio defined by a width of the first major face divided by a height of the light receiving face; and wherein the cross-sectional aspect ratio is between 2.5:1 and 4:1, or between 2.75:1 and 3.75:1, or about 3.25:1.

The first major face may include a plurality of laterally extending extraction elements, and wherein each laterally extending extraction element comprises a ridge defined by a peak flanked by a proximal side and a distal side. The peak may be rounded and may have a radius of approximately 0.20 mm.

A distal side angle may be defined between the distal side and a lateral vertical plane of an imaginary intersection of the distal side and the proximal side, the distal side angle ranging from 0 degrees to 60 degrees, or 0 degrees to 30 degrees, or 25 degrees. A proximal side angle may be defined between the proximal side and a lateral vertical plane of an imaginary intersection of the distal side and the proximal side, the proximal side angle ranging from 50 degrees to 85 degrees, or 65 degrees.

The first major face may include one extraction element for every approximately 2 mm width of the light guide. The first major face may include five extraction elements.

The angled portion of the second major face may be convexingly curved in longitudinal cross-section.

The angled portion of the second major face may include horizontally adjacent V-shaped ridges extending longitudinally from the light receiving face, whereby at a distal end of the angled portion the thickness of the light guide varies from a first thickness corresponding to peaks of the V-shaped ridges to a second thickness corresponding to troughs of the V-shaped ridges, where the first thickness is thinner than the second thickness.

The first thickness may be approximately 0.25 mm and the second thickness may be approximately 1.00 mm.

A distal end of the second major face and the distal face may define a return, and a bottom edge of the return may be approximately level with a bottom edge of the light receiving face.

The light receiving face may include vertically or horizontally extending sinusoidal flutes, the distal sides of the extraction elements may include generally vertically extending sinusoidal flutes, the angled portion of the second major face may include vertically or horizontally extending sinusoidal flutes, the return may include vertically extending sinusoidal flutes, and/or the first major face and/or the distal face may be diffuse.

**The** height of the light receiving face may be 2 mm to 4 mm, or approximately 3.2 mm, the width of the first major face may be 8 mm to 12 mm, or approximately 9.5 mm, and a length of the first major face may be 140 mm to 160 mm or, approximately 152.4 mm.

In another aspect, a luminaire is provided. The luminaire includes: at least one light guide as described herein; a plurality of light sources in optical communication with the light receiving faces; a light board with the plurality of light sources arranged thereon; and a housing for housing the light guide, the light board and the plurality of light sources.

The housing may include a reflective surface facing the second major face of the light guide, the reflective surface may be specular, semi-specular or white, the height of the light receiving face may be greater than or equal to a height of the plurality of light sources, a width of the V-shaped ridge at the light receiving face of the light guide may correspond to a width of the light source, the light source may be centrally aligned with the V-shaped ridge at the light receiving face of the light guide, a plurality of the light guides may be arranged end to end in series within the housing, the housing may include a protrusion extending over a proximal-most extraction element of the light guide, the housing may include a non-reflective surface abutting the distal face of the light guide, and the light guide may be oriented horizontally along an upper face of the luminaire.

The luminaire may include: an upper section comprising the light guide; a lower section comprising a second light guide as described herein; and a curved reflector substantially spanning between the upper section and the lower section, wherein the light guide may be oriented vertically or horizontally, and the second light guide may be oriented vertically or horizontally, and wherein the housing may include an upper cavity for housing the upper section and a lower cavity for housing the lower section, wherein the upper section may include an upper module engageable with the upper cavity in a vertical orientation whereby the light guide is vertically oriented and in a horizontal orientation whereby the light guide is horizontally oriented, and wherein the lower section may include a lower module engageable with the lower cavity in a vertical orientation whereby the second light guide is vertically oriented and in a horizontal orientation whereby the second light guide is horizontally oriented.

In configurations where the second light guide is oriented horizontally in the lower section, the lower section may include: an end wall with a non-reflective surface facing the distal face of the second light guide; and a protrusion having an upper side for securing a bottom edge of the upper reflector and a lower side extending over a proximal-most extraction element of the second light guide.

In configurations where the light guide is oriented vertically in the upper section, the upper section may include an end wall with a reflective surface facing the first major surface, an upper section of the wall adjacent the light receiving surface of the light guide, and remaining portion of the wall tapering away from the first major surface in the downstream direction.

A depth of the housing may be no greater than approximately 12.7 mm, and the light source may be an LED.

In a further aspect, a method of illuminating a ceiling is provided. The method includes: providing a luminaire as described herein; and mounting the luminaire to a wall at a point 15.2 cm to 152.4 cm from the ceiling.

In yet a further aspect, a method of installing a luminaire in a wall with standard drywall is provided. The method includes: providing a luminaire as described herein; notching the drywall; fitting the luminaire into the notched drywall; securing the luminaire to one or more studs in the wall exposed by the notched drywall; and installing a driver box for the luminaire in between the studs. The luminaire may be installed horizontally in the wall to simultaneously illuminate a ceiling and a floor, or the luminaire may be installed vertically in the wall at an inside corner defined by the wall and another wall to illuminate the other wall whereby only the lower section or the upper section opposite the other wall of the corner is populated with light sources. The driver box may be accessed by detaching the central reflector of the luminaire.

### Brief Description of Drawings

The accompanying drawings illustrate non-limiting example embodiments of the invention.
Figure 1 is a front perspective partial view of a light guide according to an embodiment.
Figure 2 is an end view of a light guide according to the embodiment shown in Figure 1.
Figure 3 is a rear partial view of a light guide according to the embodiment shown in Figure 1.
Figure 4 is a front partial view of a light guide according to the embodiment shown in Figure 1.
Figure 5 is a top partial view of a light guide according to the embodiment shown in Figure 1.
Figure 6 is a bottom partial view of a light guide according to the embodiment shown in Figure 1.
Figure 7A is a close-up view of Box A in Figure 1.
Figure 7B is rear perspective view of a light guide according to the embodiment shown in Figure 1.
Figures 8A to 8D are optical distribution plots of exemplary simulated light rays emitted from light guides having extraction elements with proximal and distal sides at different combinations of angles according to embodiments.
Figures 9A is an optical distribution plot of exemplary simulated light rays emitted from a light guide having flat bottom face according to an embodiment.
Figures 9B is an optical distribution plot of exemplary simulated light rays emitted from a light guide having a convexingly curved bottom face according to an embodiment.
Figures 10A is a cross-sectional view of a luminaire with a light guide having a bottom face with a high ramp angle according to an embodiment.
Figures 10B is an optical distribution plot of exemplary simulated light rays emitted from the light guide of Figure 10a.
Figures 11A is a cross-sectional view of a luminaire with a light guide having a bottom face with a low ramp angle according to an embodiment.
Figures 11B is an optical distribution plot of exemplary simulated light rays emitted from the light guide of Figure 11A.
Figures 12A is an optical distribution plot of exemplary simulated light rays emitted from a light guide without certain homogenization features according to an embodiment.
Figures 12B is an optical distribution plot of exemplary simulated light rays emitted from a light guide with certain homogenization features according to an embodiment.
Figures 13A is a cross-sectional view of a luminaire with a light guide according to an embodiment.
Figures 13B is a close up view in the downstream direction of cross-sectional plane AA of Figure 13A.
Figures 14A to 14D show exemplary simulated ray traces of light internally reflecting and then refracting out a light guide according to the embodiment shown in Figure 13.
Figures 15A is a cross-sectional view of a luminaire with two light guides according to an embodiment.
Figures 15B is an optical distribution plot of exemplary simulated light rays emitted from the luminaire shown in Figure 16A.
Figure 16A is a close-up view of Box B in Figure 15A.
Figure 16B is an optical distribution plot of exemplary simulated light rays emitted from the light guide shown in Figure 16A.
Figure 17A is a close-up view of Box C in Figure 15A.
Figure 17B is an optical distribution plot of exemplary simulated light rays emitted from the light guide shown in Figure 17A.
Figure 18 is a perspective view of a luminaire according to an embodiment.
Figure 19 is a perspective view of a luminaire according to an embodiment.
Figure 20 is a partially exploded partial top view of a luminaire according to an embodiment.

### Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive, sense.

The term "approximately" as used herein in relation to numbers refers to ±10%, preferably ±5%, for example to ±1%.

The term "generally" as used herein represents a value, amount, or characteristic that predominantly includes or tends toward a particular value, amount, or characteristic. As an example, in certain embodiments, as the context may dictate, the term "generally vertically" can refer to something that departs from exactly vertical by ±10 degrees.

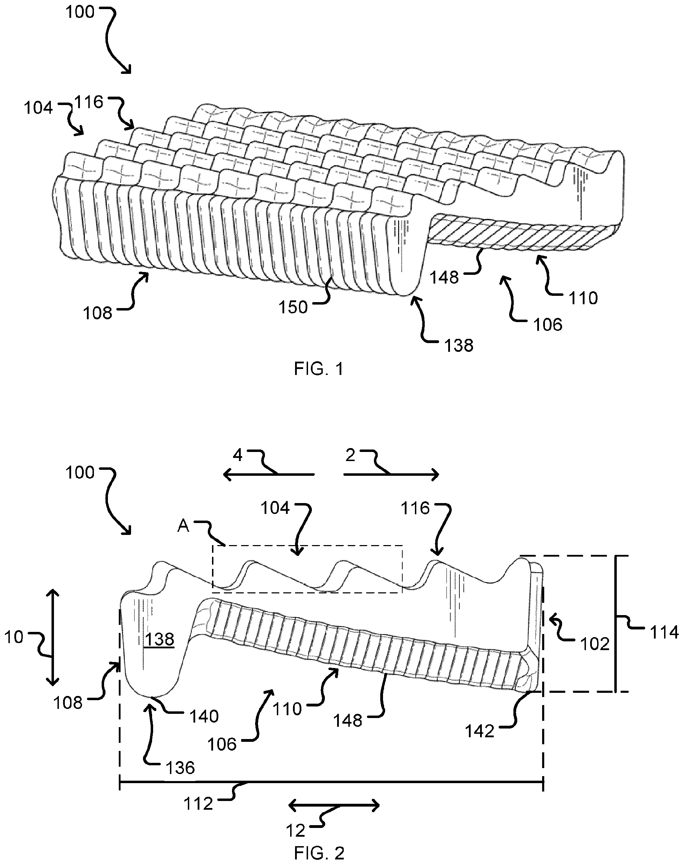

The term "proximal" and "upstream" as used herein with respect to features of the light guide means a position relatively closer to, or direction toward, a light receiving face of the light guide, and the term "distal" and "downstream" as used herein means a position relatively farther away from, or direction away from, the light receiving face of the light guide. Arrow 2 in Figure 2 illustrates the proximal and upstream direction, and arrow 4 in Figure 2 illustrates the distal and downstream direction.

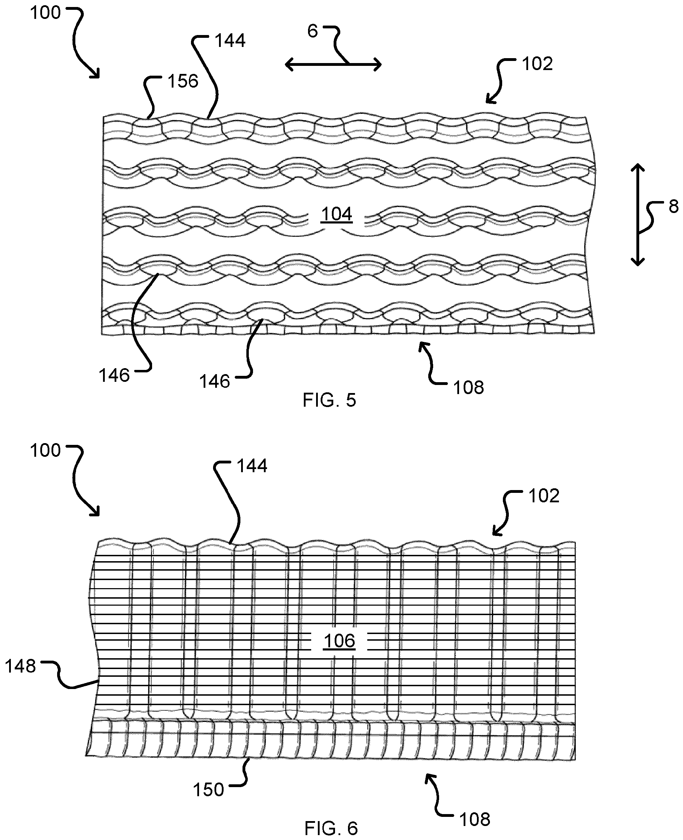

The term "longitudinal" or "longitudinally" as used herein with respect to features of the light guide means a direction or orientation parallel to the proximal/distal axis, and the term "lateral" or "laterally" as used herein with respect to features of the light guide means a direction or orientation perpendicular to the proximal/distal axis. Arrow 8 in Figure 5 illustrates the longitudinal direction, and arrow 6 in Figure 5 illustrates the lateral direction.

The term "vertical" or "vertically" as used herein with respect to features of the light guide means a direction or orientation parallel to the proximal/distal axis, and the term "lateral" or "laterally" as used herein with respect to features of the light guide means a direction or orientation normal to the proximal/distal axis. Arrow 10 in Figure 2 illustrates the vertical direction, and arrow 12 in Figure 2 illustrates the horizontal direction.

Aspects of the invention relate to light guides having a compact form factor with combinations of features that homogenize light. Aspects of the invention also relate to luminaires incorporating such light guides.

Figures 1 to 7 show a light guide 100 according to an embodiment. Light guide 100 has a light receiving face 102 and an opposite distal face 108. A first major face 104 generally defining a top surface of light guide 100 extends between light receiving face 102 and distal face 108. The plane of first major face104 is generally perpendicular to both light receiving face 102 and distal face 108.

A second major face 106 generally defining a bottom surface of light guide 100 is opposite to first major face 104. Most of second major face 106 is an angled portion 110 tapering upward toward first major face 104 in a downstream direction 4. Second major face 106 is reflective, for example specular or semi-specular, in order to reflect internal light into a more desirable region to produce an asymmetric distribution.

**As** best shown in Figure 2, light guide 100 has a cross-sectional aspect ratio defined by a width 112 of first major face 104 divided by a height 114 of light receiving face 102. In some embodiments this cross-sectional aspect ratio is between 2.75:1 and 3.75:1.

First major face 104 is substantially covered by a plurality of laterally extending extraction elements 116. Each laterally extending extraction element 116 is shaped like a ridge 118 in longitudinal cross-section as shown in Figure 2.

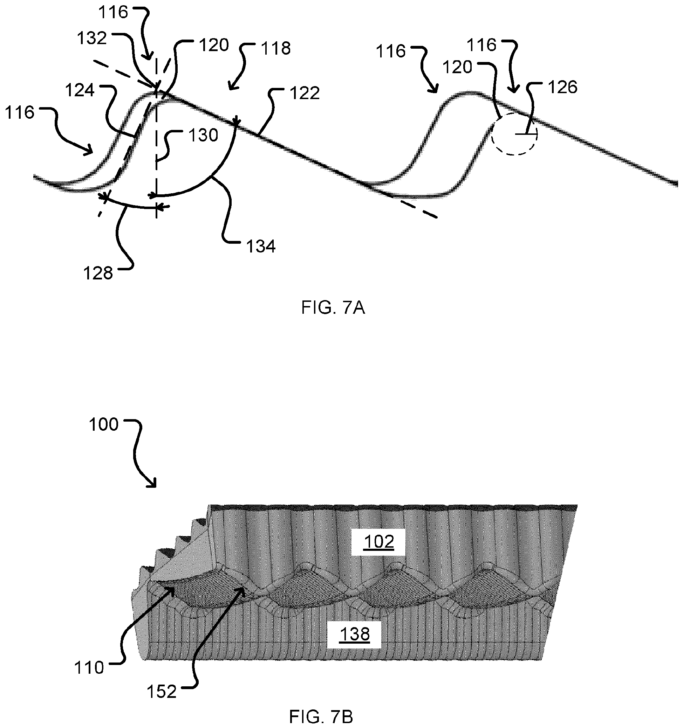

**As** best shown in the close-up view of Figure 7, ridge 118 is defined by a peak 120 having a proximal side 122 and a distal side 124. Peak 120 is rounded. The roundedness of peak 120 is defined by a radius 126 of the rounded portion. In some embodiments radius 126 is approximately 0.20 mm.

A distal side angle 128 is defined between distal side 124 and a lateral vertical plane 130 of an imaginary intersection 132 of the distal side 124 and the proximal side 122. In some embodiments distal side angle 128 ranges from approximately 0 degrees to 60 degrees, or approximately 0 degrees to 30 degrees, or approximately 25 degrees. The inventor determined that as distal side angle 128 becomes larger, more of the light rays internally reflect and cycles in the light guide instead of being extracted leading to a less efficient light guide; on the other hand, as distal angle 128 approaches 0 degrees, manufacturing limitations increase in prominence, i.e., as the lower limit 0.20 mm fillet round out more of the valleys of the sawtooth pattern, less control surfaces result (as rounding removes optical control surface).

A proximal side angle 134 is defined between the proximal side 122 and a lateral vertical plane 130 of an imaginary intersection 132 of the distal side 124 and the proximal side 122, the proximal side angle 134 ranging from approximately 50 degrees to 85 degrees, or approximately 65 degrees. The inventor determined that as proximal side angle 134 approaches 0 degrees the proximal side becomes steeper and thins out the light guide relative to the second major surface (leading to fragility and manufacturing difficulty), whereas as proximal side angle 134 approaches 90 degrees the overall height of the extraction element decreases once again leading to the situation where the fillet erodes more and more of the optical control surface.

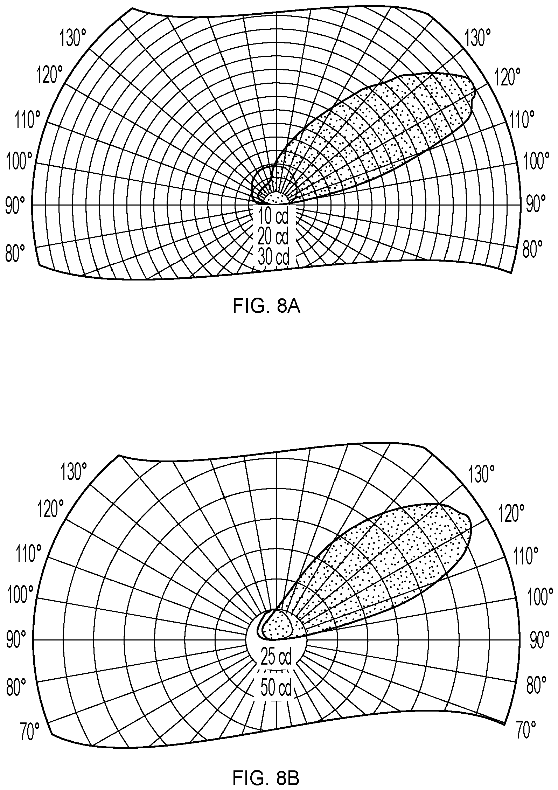

Figures 8A to 8D are optical distribution plots of exemplary simulated light rays emitted from light guides having extraction elements with different combinations of distal side angles and proximal side angles. The optical distribution plots herein each show an asymmetric distribution (outer, larger ring) and a generally lambertian distribution (inner, smaller ring(s)). The asymmetric distributions result from the various optical controls (especially the extraction elements) of the light guides herein along their longitudinal axis. The lambertian distributions go along the lateral axis of the light guides herein and are less relevant.

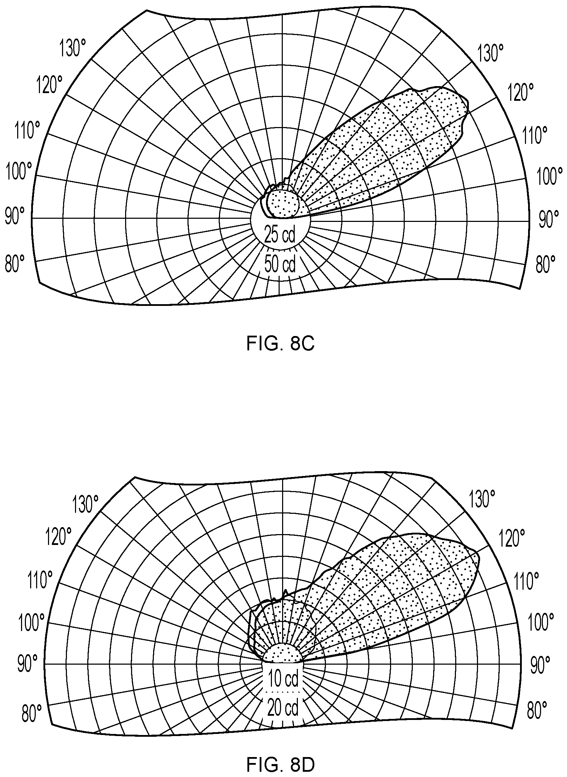

Figure 8A shows the optical distribution where the extraction elements have a distal side angle of 10 degrees and a proximal side angle of 65 degrees. Figure 8B shows the optical distribution where the extraction elements have a distal side angle of 35 degrees and a proximal side angle of 65 degrees. Figure 8C shows the optical distribution where the extraction elements have a distal side angle of 45 degrees and a proximal side angle of 65 degrees. Figure 8D shows the optical distribution where the extraction elements have a distal side angle of 45 degrees and a proximal side angle of 80 degrees. All of Figures 8A to 8D show desirable, tight asymmetric batwing distributions.

In some embodiments, first major face 104 has one extraction element 116 for every approximately 2 mm width of light guide 100. In some embodiments, such as light guide 100, first major face 104 has five extraction elements 116. In some embodiments, first major face 104 has less than five, or greater than five, extraction elements 116.

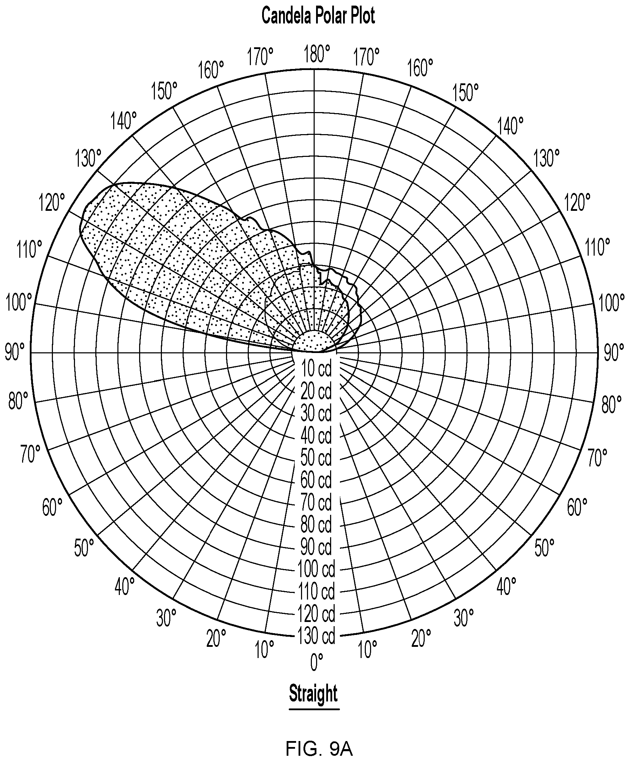

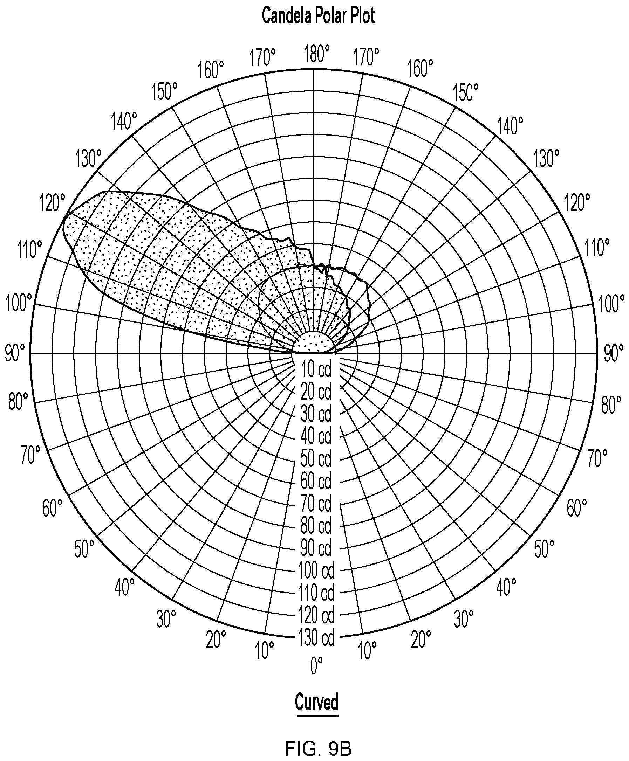

In some embodiments angled portion 110 of second major face 106 is convexingly curved in longitudinal cross-section, as shown best in Figures 1, 2, and 7B. Figures 9A to 9B are optical distribution plots of exemplary simulated light rays emitted from light guides having either a planar second major face (Figure 9A) or a convexingly curved second major face (Figure 9B). Curving of second major surface 106 has thus been shown to enhance by account for different incidence angles from the light source, and creating a more focused distribution.

Light guide 100 also includes a return 138, defined by a distal end 136 of second major face 106 and distal face 108. A bottom edge 140 of return 138 is approximately level with a bottom edge 142 of the light receiving face 102. Return 138 is provided for mechanical purposes, largely to facilitating securing of light guide 100 in the housing of a luminaire in a level manner. In some embodiments return 138 is absent and angled portion 110 extends the entire width of light guide 100 to distal face 108.

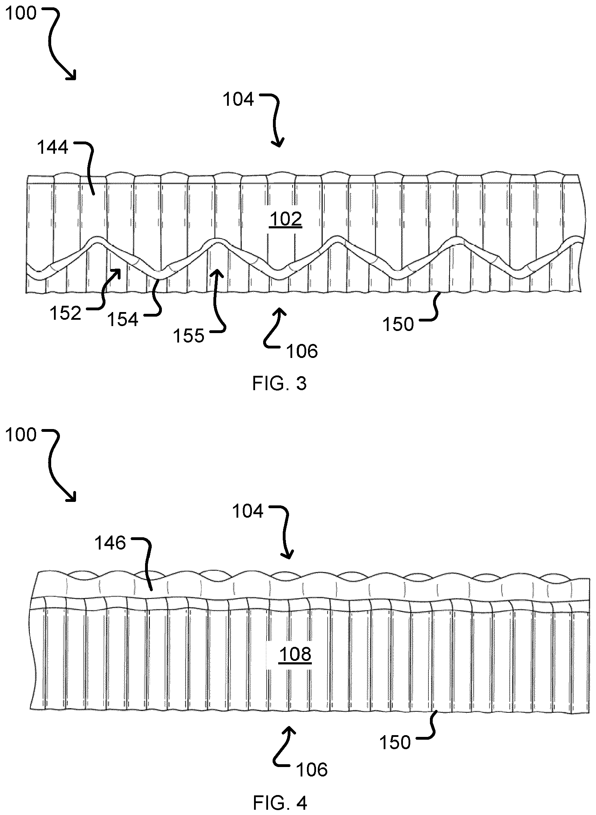

Various surfaces of light guide 100 are also fluted to enhance light homogenization. As best shown in Figures 3 and 5, light receiving face 102 includes vertically extending sinusoidal flutes 144. As best shown in Figure 5, distal sides 124 of extraction elements 116 include sinusoidal flutes 146 that extend along the same angles of distal side 124. Flutes 144 and 146 are thus oriented perpendicular to the pitch of the light sources (e.g. LEDs) which allows for better spread between diodes and to prevent dark spots/drop in intermediate distances.

**As** best shown in Figures 1, 2 and 6, angled portion 110 of second major face 106 includes horizontally extending sinusoidal flutes 148. Flutes 148 thus run parallel to the pitch of the light sources to mix colour banding/striations that could potentially be introduced when light exits from neighbouring extraction elements 116.

As best shown in Figures 1, 3, 4 and 6, return 138 includes sinusoidal flutes 150 that wrap around return 138 in a longitudinal/vertical manner.

As best shown in Figures 3 and 7B, angled portion 110 of second major face 106 has horizontally adjacent V-shaped ridges 152 extending longitudinally from the light receiving face 102 to return 138. At a distal end of angled portion 110 the thickness of light guide 100 varies from a first thickness corresponding to peaks of the V-shaped ridge 152 to a second thickness corresponding to troughs of the V-shaped ridge 152. The first thickness is about 0.25 mm and the second thickness is about 1.00 mm.

In some embodiments, V-shaped ridges 152 may be absent and instead the bottom edge of light receiving surface 102 may be linear and extend along where bottoms 154 of V-shaped ridges would be, resulting in a rectangular light receiving surface and a generally planar second major surface.

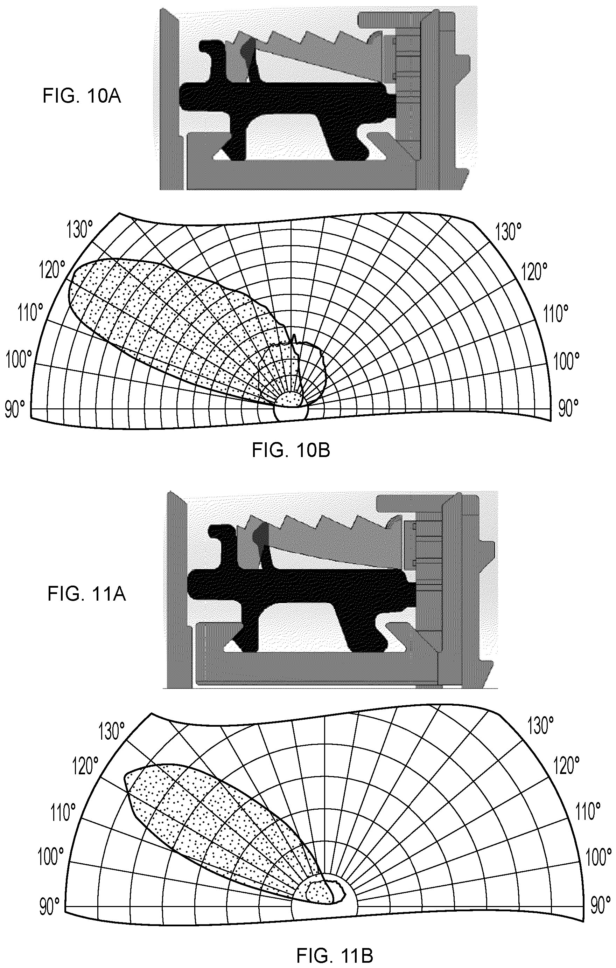

**An** advantage of the V-shaped ridges is that they balance optical considerations with mechanical/manufacturing considerations. A continuous minimum thickness of for example 0.25 mm would be ideal for aiming as much light as possible into a desirable portion of the distribution. Here, see Figure 10A shows a light guide with a higher ramp angle, and therefore thinner light guide, than Figure 10B which shows a light guide with a lower ramp angle, and therefore thicker light guide. As is apparent from their respective optical distribution plots (Figure10B versus Figure 11B), the thinner light guide with the higher ramp angle has superior light distribution.

However, such a thin section as in Figure 10A would be too fragile and lead to material flow constraints and concerns during injection molding. Thus the undulating V-shaped ridges that transition back and forth from a thinner to thicker portion at the distal end of the angled portion was determined to provide an efficient compromise by providing better mechanical strength at the thicker portion and better optical distributing properties at the thinner portion.

Also, compared to a generally planar second major surface with a rectangular light receiving surface, light from a light source can initially enter between the V-shaped ridges and then hit the second major face and refract into the light guide, and thus more likely to leave the light guide through the first major face rather than the distal face. In the absence of the V-shaped ridges, the same light from the light source will simply travel through the light guide without refracting and thus more likely leave the light guide through the distal face rather than the first major face.

In some embodiments, some or all light exit surfaces of light guide 100 are diffuse. In some embodiments first major face 104 and distal face 108 have diffuse surfaces. A diffuse surface may be achieved be achieved by providing a diffuse surface on the face, overlaying a diffuse film on the face, providing a diffuse material within the light guide immediately underneath the face, and the like. In some embodiments, the diffusion may be in a linear pattern (e.g. ridges or grooves aligned horizontally across the face), while in other embodiments the diffusion may be nonlinear or random (e.g. randomly arranged bumps or dimples or a frosted finish). Diffusion on exit surfaces mix light as it exits light guide 100 and enters the target space.

In some embodiments, height 114 of light receiving face 102 is approximately 2 mm to 4 mm, or approximately 3.2 mm, width 112 of first major face 104 is approximately 8 mm to 12 mm, or approximately 9.5 mm, and a length of first major face 104 is approximately 140 mm to 160 mm or, approximately 152.4 mm.

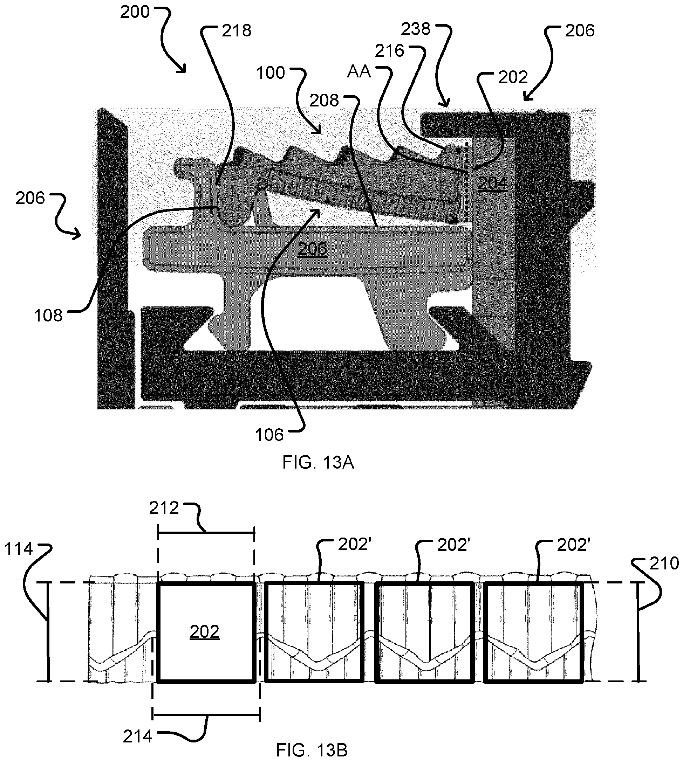

Figures 13A, 13B, 19 and 20 show a luminaire 200 according to an embodiment. Luminaire 200 is configured to provide an indirect asymmetric distribution. Luminaire 200 includes at least one light guide as described herein and a plurality of light sources 202 in optical communication with light receiving faces of the light guides. Light sources 202 are arranged on a light board 204. A housing 206 houses the light guide, light board 206 and plurality of light sources 202.

Housing 206 includes a reflective surface 208 facing second major face 106 of the light guide. Reflective surface 208 may be specular, semi-specular or white. Reflective surface 208 allows light escaping second major face 106 to reflect back into light guide 100 and eventually exit first major surface 104 in a Lambertian distribution to create some "fill" for areas close to luminaire 200.

Height 114 of light receiving face 102 is greater than or equal to a height 210 of the plurality of light sources 202. Height 114 of the light receiving faces 102 is approximately equal to the height 210 of the plurality of light sources 202. Width 214 of V-shaped ridge 152 at light receiving face 102 of light guide 100 corresponds to a width 212 of the light source 202, that is slightly less in width than width 212 of the light source 202.

Light source 202 is centrally aligned with the V-shaped ridge 152 at light receiving face 102 of the light guide 100. Figure 13B shows a light source 202 in solid fill and remaining light sources 202' in transparent fill for a clearer understanding of the alignment. In some embodiments the V-shaped ridges at light receiving face 102 are fully populated with light sources (i.e., minimum LED pitch) whereas in some embodiments the LED pitch may be up to 25 mm; regardless of such foregoing LED pitch variation, the internal mixing of light achieved by the light guides is sufficient without a noticeable dropoff or shadowing on a target surface.

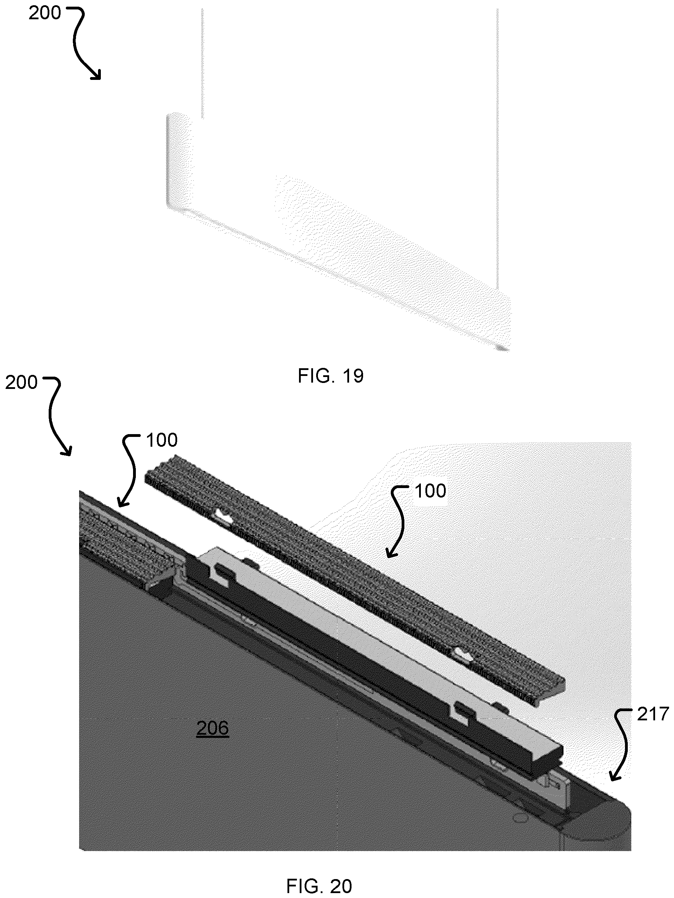

As shown in Figure 20, luminaire 200 has a plurality of the light guides 100 oriented horizontally to provide an asymmetric indirect batwing distribution. Light guides 100 are arranged end to end within housing 206 along an upper face 21 of luminaire 200. Thus, as shown in Figure 19, luminaire 200 is mounted on a wall, with light directed asymmetrically upwards to illuminate to the target surface, such as a ceiling of other overhead surface. In some embodiments luminaire 200 is installed 31 mm from a wall, a dimension dictated by the driver enclosure and the height of the LED driver and wiring/assembly room. In some embodiments luminaire 200 is installed 15.2 cm (6 inches) to 152.4 cm (60 inches) from a ceiling.

**As** shown in Figure 13A, housing 206 includes a protrusion 238 extending over a proximal-most extraction element 216 of light guide 100 to prevent direct line of sight from light source 202 to the ceiling, as such a direct line of sight introduces undesirable coloured striations onto the target surface. Housing 206 also includes a non-reflective surface 218 abutting distal face 108 of light guide 100 to prevent undesirable retroreflection or "hot spots".

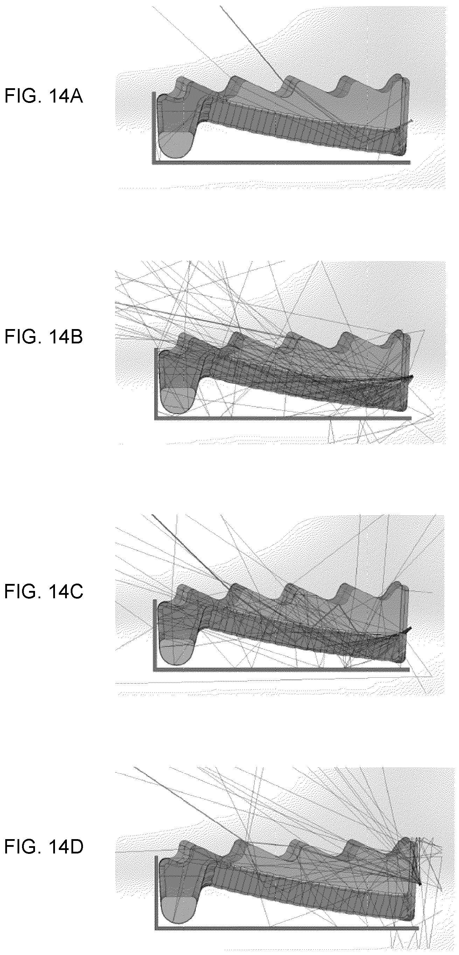

Figures 14A to 14D show exemplary simulated ray traces of light internally reflecting and then refracting out light guide 100, as well as reflecting off of reflective surface 208, showing the desirable collimation of light achieved by the combined optical control features described herein.

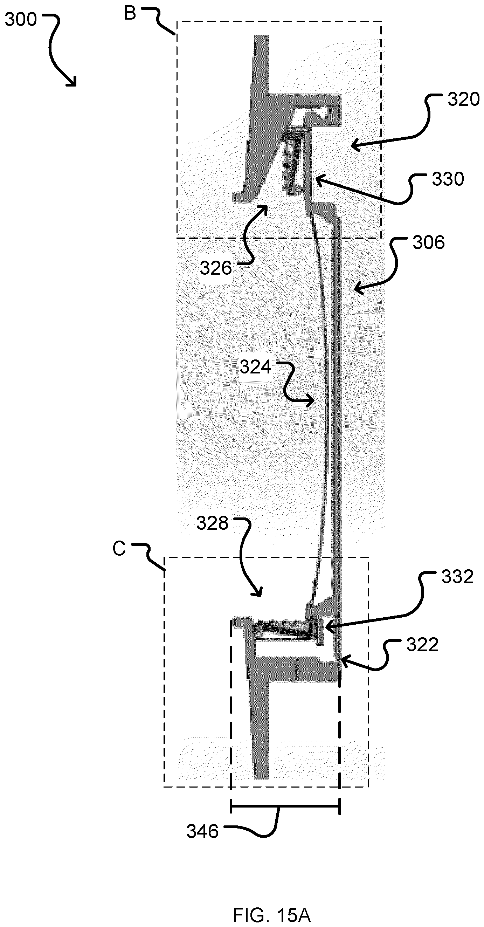

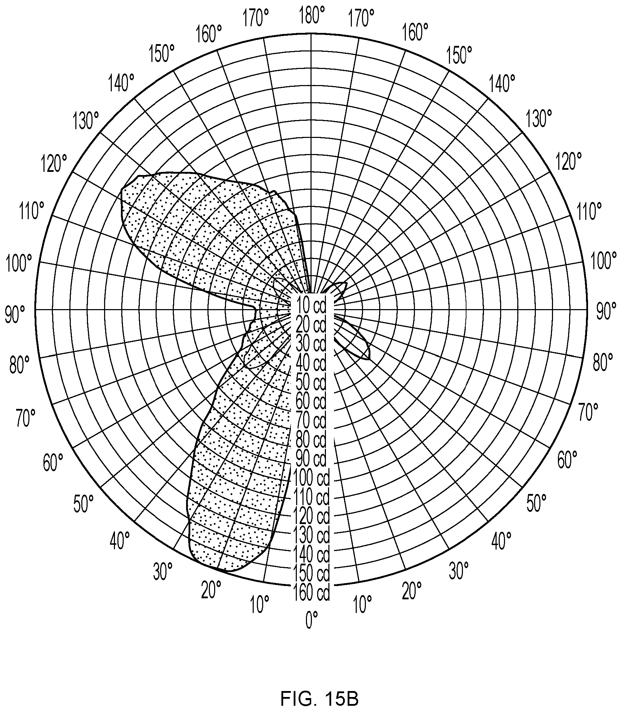

Figures 15A, 16A, 17A, and 18 show a luminaire 300 according to an embodiment. Luminaire 300 includes a housing 306, an upper section 320 with a light guide 100, a lower section 322 with a second light guide 100', and a curved reflector 324 substantially spanning between upper section 320 and lower section 324. As in light guide 200, a plurality of light guides 100 may be provided end to end in upper section 320, and a plurality of light guides 100' may be provided end to end in lower section 322. The surface of curved reflector 324 may be specular, semi-specular or white. Figure 15B shows an optical distribution plot of the asymmetric distribution provided by luminaire 300. Curved reflector 324 may be detachable, thus also serving as an aesthetic cover for a driver access cavity in housing 306 behind curved reflector 324.

In luminaire 300, light guide 100 may be oriented vertically or horizontally, and second light guide 100' may be oriented vertically or horizontally. This is accomplished by housing 306 having an upper cavity 326 for housing upper section 320 and a lower cavity 328 for housing lower section 322. Upper section 320 includes an upper module 330 engageable with upper cavity 328 in an orientation whereby light guide 100 is vertically oriented and in an orientation whereby light guide 100 is horizontally oriented. Likewise, lower section 322 includes a lower module 332 engageable with lower cavity 328 in an orientation whereby second light guide 100' is vertically oriented and in an orientation whereby second light guide 100' is horizontally oriented. In some embodiments, horizontal orientation provides indirect illumination, such as on a ceiling. In some embodiments, vertical orientation provides direct illumination, such as on a pathway.

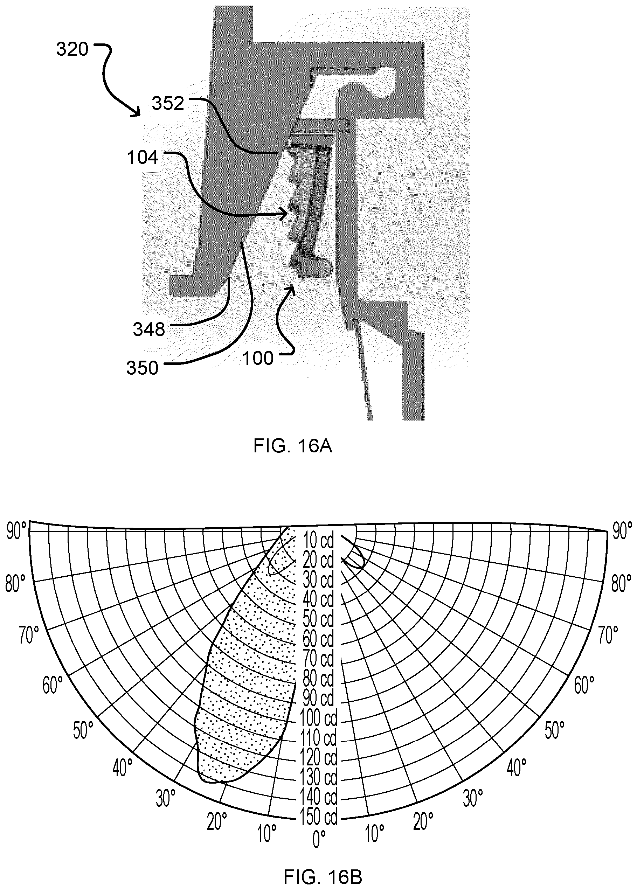

In configurations of luminaire 300 where light guide 100 is oriented vertically in upper section 320, an direct asymmetric distribution is provided, as shown in the optical distribution plot of Figure 16B. Upper section 320 includes an end wall 348 with a reflective surface 350 facing first major surface 104. Reflective surface 350 may be specular, semi-specular or white. An upper section of end wall 348 is adjacent light receiving surface 102 of light guide 100, and the remaining portion of end wall 348 tapers away from first major surface 104 in the downstream direction.

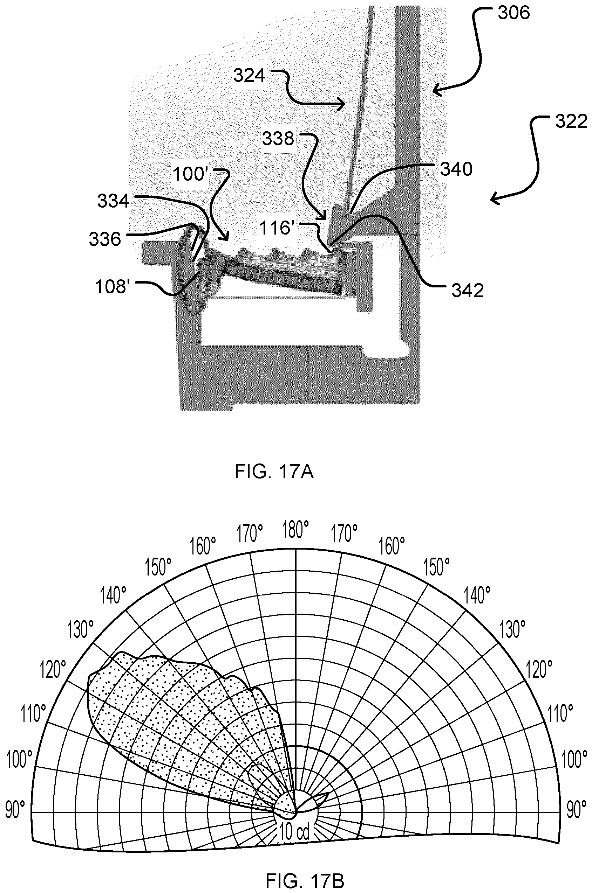

In configurations of luminaire 300 where second light guide 100' is oriented horizontally in lower section 322, an indirect asymmetric distribution is provided, as shown in the optical distribution plot of Figure 17B. Lower section 322 includes an end wall 334 with a non-reflective surface 336 facing distal face 108' of second light guide 100' to prevent undesirable retroreflection or "hot spots". Lower section 322 also includes a protrusion 338 having an upper side 340 for securing a bottom edge 344 of reflector 324 and a lower side 342 extending over a proximal-most extraction element 116' of second light guide 100' to prevent undesirable coloured striations onto the target surface as previously discussed.

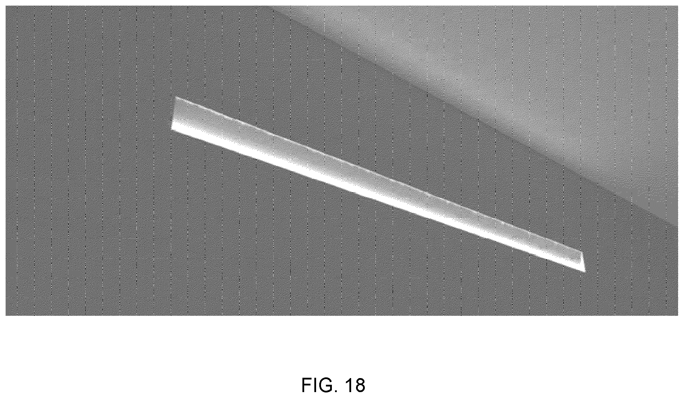

Luminaire 300 is designed to leverage the compact form factor of the light guides described herein. In some embodiments, housing 306 of luminaire 300 has a total depth of approximately 12.7 mm (1/2 inch), that is, no deeper than the thickness of standard drywall. This permits easy installation or retrofitting of one or more luminaire 300 into any wall by notching out a section of the wall and installing the luminaires therein, even across studs. The driver box for the luminaire is narrower than the standard spacing of studs (e.g. 40.6 cm or 16 inches) so can be installed between studs. In some embodiments, luminaire 300 is oriented horizontally along a wall, that is, in the orientation shown in Figures 15A and 18. In some embodiments, luminaire 300 is oriented vertically, such as at an inside corner of a wall, for illuminating the other wall; in such embodiments only the section facing the other wall would be populated with light sources.

The optical control features (e.g. extraction elements, curved angled portion, ramp angle variation) of the light guides described herein have been designed to have a strongly focused asymmetric distribution aimed at approximately 30 degrees above the horizontal, with an emphasis on minimizing light exiting directly up or behind the luminaire. The reasoning for this emphasis was because an appreciable amount of light was expected to leave at high angles/retroflect due to the aggressive homogenization features (combination of flutes, diffuse exit surfaces and reflective surface 208) used.

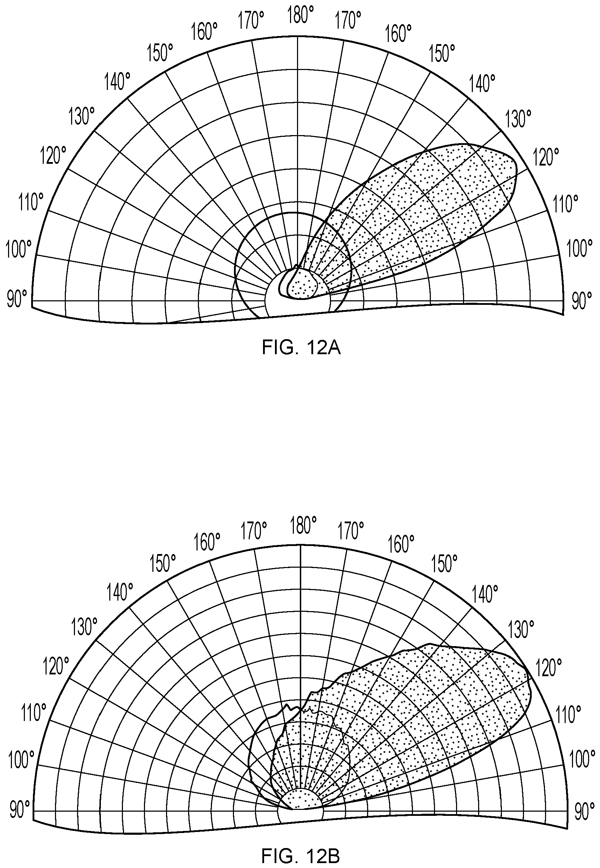

Figure 12A is a optical distribution plot of a light guide according to an embodiment with the optical control features but without the homogenization features. The circle in Figure 12A helps clarify that light exiting directly up or behind the light guide is minimized. Figure 12B is a optical distribution plot of a light guide according to an embodiment with the optical features and homogenization features described herein, representing a desirable balance of homogenization and strength/focus of distribution to providing a uniform and illuminated target surface, even when the luminaire is very close (e.g. within a couple of inches) to the target surface (e.g. a ceiling).

In some embodiments, light guides as described herein provide an asymmetric batwing distribution focused to approximately 30 degrees but ranging from 10 degrees to 40 degrees above the horizontal or from the vertical, with a luminous intensity peak to zenith ratio ranging from 2.5:1 to 5:1 with homogenization features, and a luminous intensity peak to zenith ratio will approach 7:1 without homogenization features.

The above describe certain embodiments of the invention. Other embodiments are possible. In some embodiments the luminaire's housing may be configured to fit a sealing cover, such as for healthcare applications. Where a component is referred to above, unless otherwise indicated, reference to that component (including a reference to a "means") should be interpreted as including as equivalents of that component any component which performs the function of the described component (i.e. that is functionally equivalent), including components which are not structurally equivalent to the disclosed structure which performs the function in the illustrated exemplary embodiments of the invention.

It is therefore intended that the following appended claims and claims hereafter introduced are interpreted to include all such modifications, permutations, additions and sub-combinations as are consistent with the broadest interpretation of the specification as a whole.

## Claims

1. A light guide comprising:
a light receiving face;
a distal face opposite to the light receiving face;
a first major face extending between, and perpendicular to, the light receiving face and the distal face;
a second major face generally opposite to the first major face and comprises an angled portion tapering toward the first major face in a downstream direction;
wherein the light guide comprises a cross-sectional aspect ratio defined by a width of the first major face divided by a height of the light receiving face; and
wherein the cross-sectional aspect ratio is between 2.5:1 and 4:1, or between 2.75:1 and 3.75:1, or about 3.25:1.

2. A light guide according to claim 1 wherein the first major face comprises a plurality of laterally extending extraction elements, wherein each laterally extending extraction element comprises a ridge defined by a peak flanked by a proximal side and a distal side, and wherein the peak is rounded and comprises a radius of approximately 0.20 mm.

3. A light guide according to claim 1 or 2 comprising a distal side angle defined between the distal side and a lateral vertical plane of an imaginary intersection of the distal side and the proximal side, the distal side angle ranging from 0 degrees to 60 degrees, or 0 degrees to 30 degrees, or 25 degrees, and comprising a proximal side angle defined between the proximal side and a lateral vertical plane of an imaginary intersection of the distal side and the proximal side, the proximal side angle ranging from 50 degrees to 85 degrees, or 65 degrees, wherein the first major face comprises one extraction element for every approximately 2 mm width of the light guide, wherein the first major face comprises five extraction elements, wherein the angled portion of the second major face is convexingly curved in longitudinal cross-section, wherein the angled portion of the second major face comprises horizontally adjacent V-shaped ridges extending longitudinally from the light receiving face, whereby at a distal end of the angled portion the thickness of the light guide varies from a first thickness corresponding to peaks of the V-shaped ridges to a second thickness corresponding to troughs of the V-shaped ridges, where the first thickness is thinner than the second thickness, and wherein the first thickness is approximately 0.25 mm and the second thickness is approximately 1.00 mm.

4. A light guide according to any one of claims 1 to 3 wherein a distal end of the second major face and the distal face define a return, and wherein a bottom edge of the return is approximately level with a bottom edge of the light receiving face.

5. A light guide according to any one of claims 1 to 4 wherein the light receiving face comprises vertically or horizontally extending sinusoidal flutes, wherein the distal sides of the extraction elements comprises generally vertically extending sinusoidal flutes, wherein the angled portion of the second major face comprises vertically or horizontally extending sinusoidal flutes, wherein the return comprises vertically extending sinusoidal flutes, and/or wherein the first major face and/or the distal face is diffuse.

6. A light guide according to any one of claims 1 to 5 wherein the height of the light receiving face is 2 mm to 4 mm, or approximately 3.2 mm, the width of the first major face is 8 mm to 12 mm, or approximately 9.5 mm, and a length of the first major face is 140 mm to 160 mm or, approximately 152.4 mm.

7. A luminaire comprising:
at least one light guide according to any one of claims 1 to 6;
a plurality of light sources in optical communication with the light receiving faces;
a light board with the plurality of light sources arranged thereon; and
a housing for housing the light guide, the light board and the plurality of light sources.

8. A luminaire according to claim 7 wherein the housing comprises a reflective surface facing the second major face of the light guide, wherein the reflective surface is specular, semi-specular or white, wherein the height of the light receiving face is greater than or equal to a height of the plurality of light sources, wherein a width of the V-shaped ridge at the light receiving face of the light guide corresponds to a width of the light source, wherein the light source is centrally aligned with the V-shaped ridge at the light receiving face of the light guide, wherein a plurality of the light guides are arranged end to end in series within the housing, wherein the housing comprises a protrusion extending over a proximal-most extraction element of the light guide, wherein the housing comprises a non-reflective surface abutting the distal face of the light guide, and wherein the light guide is oriented horizontally along an upper face of the luminaire.

9. A luminaire according to claim 7 or 8 comprising:
an upper section comprising the light guide;
a lower section comprising a second light guide according to any one of claims 1 to 6; and
a curved reflector substantially spanning between the upper section and the lower section,
wherein the light guide is oriented vertically or horizontally, and the second light guide is oriented vertically or horizontally, and
wherein the housing comprises an upper cavity for housing the upper section and a lower cavity for housing the lower section, wherein the upper section comprises an upper module engageable with the upper cavity in a vertical orientation whereby the light guide is vertically oriented and in a horizontal orientation whereby the light guide is horizontally oriented, and wherein the lower section comprises a lower module engageable with the lower cavity in a vertical orientation whereby the second light guide is vertically oriented and in a horizontal orientation whereby the second light guide is horizontally oriented.

10. A luminaire according to claim 9 wherein, in configurations where the second light guide is oriented horizontally in the lower section, the lower section comprises:
an end wall with a non-reflective surface facing the distal face of the second light guide; and
a protrusion having an upper side for securing a bottom edge of the upper reflector and a lower side extending over a proximal-most extraction element of the second light guide.

11. A luminaire according to claim 9 wherein, in configurations where the light guide is oriented vertically in the upper section, the upper section comprises an end wall with a reflective surface facing the first major surface, an upper section of the wall adjacent the light receiving surface of the light guide, and remaining portion of the wall tapering away from the first major surface in the downstream direction.

12. A luminaire according to any one of claims 7 to 11 wherein a depth of the housing is no greater than approximately 12.7 mm, and wherein the light source is an LED.

13. A method of illuminating a ceiling, the method comprising:
a. providing a luminaire according to any one of claims 7 to 12; and
b. mounting the luminaire to a wall at a point 15.2 cm to 152.4 cm from the ceiling.

14. A method of installing a luminaire in a wall with standard drywall, the method comprising:
a. providing a luminaire according to any one of claims 7 to 12;
b. notching the drywall;
c. fitting the luminaire into the notched drywall;
d. securing the luminaire to one or more studs in the wall exposed by the notched drywall; and
e. installing a driver box for the luminaire in between the studs,
wherein the luminaire is installed horizontally in the wall to simultaneously illuminate a ceiling and a floor, or wherein the luminaire is installed vertically in the wall at an inside corner defined by the wall and another wall to illuminate the other wall whereby only the lower section or the upper section opposite the other wall of the corner is populated with light sources.

15. A method according to claim 14 further comprising accessing the driver box by detaching the central reflector of the luminaire.
